# FASCICULE DE BREVET EUROPEEN

(11) **EP 2 643 192 B1**
(45) Date de publication et mention de la délivrance du brevet: **10.09.2014**
(21) Numéro de dépôt: 11802486.8
(22) Date de dépôt: 21.11.2011
(51) Int. Cl.: B60R 19/34, F16F 7/12

(54) **DISPOSITIF D'ABSORPTION D'ENERGIE AVEC DES FIBRES NOYEES DANS UNE MATIERE PLASTIQUE, ET FACE AVANT ASSOCIEE**
ENERGIEABSORPTIONSVORRICHTUNG MIT IN KUNSTSTOFF EINGEBETTETEN FASERN UND ZUGEHÖRIGE VORDERSEITE
ENERGY ABSORPTION DEVICE WITH FIBRES EMBEDDED IN A PLASTIC MATERIAL, AND ASSOCIATED FRONT FACE

(30) Priorité: 22.11.2010 FR 1059581
(43) Date de publication de la demande: 02.10.2013
(73) Titulaire: Faurecia Bloc Avant, 92000 Nanterre (FR)
(72) Inventeur: BURON, Marie-Pierre, F-25260 Montenois (FR); COMPAGNON, Philippe, F-25700 Valentigney (FR); STEINMETZ, Abla, F-25310 Herimoncourt (FR); GONIN, Vincent, F-37540 Saint Cyr Sur Loire (FR)
(74) Mandataire: Blot, Philippe Robert Emile
(86) Numéro de dépôt international: PCT/FR2011/052711
(87) Numéro de publication internationale: WO 2012/069746

(56) Documents cités:
- EP-A2- 1 617 098
- WO-A1-2007/011238
- DE-A1- 19 931 981
- FR-A1- 2 911 831
- FR-A1- 2 919 566
- FR-A1- 2 927 033
- GB-A- 1 391 780
- GB-A- 2 437 499

## Description

La présente invention concerne en général les dispositifs d'absorption d'énergie pour véhicule automobile.

On connaît par exemple des dispositifs d'absorption d'énergie pour les chocs de moyenne intensité de type Danner. Ces absorbeurs d'énergie sont typiquement interposés entre la face avant du véhicule et les longerons principaux, ou entre la face avant et les longerons inférieurs du véhicule. Les longerons inférieurs sont aussi connus sous le nom de « prolonge de berceau ».

De tels absorbeurs de chocs sont typiquement formés de boîtes métalliques tarées pour se déformer de manière plastique en cas de chocs d'intensité supérieure à une énergie prédéterminée, en absorbant une partie de l'énergie du choc. De tels absorbeurs sont décrits par exemple dans FR 0756932. La force provoquant la déformation plastique de l'absorbeur d'énergie, encore appelée tarage de l'absorbeur d'énergie, doit être la plus élevée possible pour permettre une dissipation efficace de l'énergie dans un encombrement réduit. Elle doit être donc supérieure à une borne inférieure Fmini.

Cette force doit également être inférieure au tarage des longerons principaux ou des longerons inférieurs, afin de ne pas provoquer de déformation permanente des longerons en cas de chocs. Ainsi, le tarage doit être inférieur à une limite supérieure Fmaxi.

Il est impératif que le tarage du dispositif absorbeur d'énergie soit très proche de Fmaxi par valeur inférieure. En pratique, la différence entre Fmini et Fmaxi est d'environ 20%, le dispositif d'absorption d'énergie devant se trouver dans cette fourchette.

Par ailleurs, il est connu que le tarage d'un dispositif absorbeur d'énergie peut varier avec la température ambiante. Le cahier des charges imposé par les constructeurs automobiles impose typiquement que le tarage des dispositifs absorbeurs d'énergie soit dans la fourchette susmentionnée pour toute la plage de température allant de -30°C à +80°C.

Les dispositifs absorbeurs de chocs de type boîte métallique présentent généralement une bonne stabilité en température. En revanche, ils présentent une masse élevée et sont de structure complexe, puisqu'ils comportent généralement plusieurs pièces assemblées les unes aux autres : une semelle d'appui, un bloc de mousse d'aluminium ou une boîte métallique, une enveloppe déformable à l'intérieur de laquelle est inséré le bloc de mousse métallique ou la boîte métallique etc... De ce fait, ces absorbeurs sont coûteux, du fait que leur assemblage demande beaucoup de temps et met en jeu un grand nombre de pièces.

Dans ce contexte, l'invention vise à proposer un dispositif absorbeur de chocs qui soit plus simple, moins coûteux, mais dont les performances soient stables avec la température.

A cette fin, l'invention selon un premier aspect et selon la revendication 1 porte sur un dispositif d'absorption d'énergie comprenant une structure prévue pour se déformer de manière plastique sous l'effet d'un choc d'énergie donnée en absorbant une partie de l'énergie du choc, la structure étant en un matériau comportant :
- une matrice en une matière plastique ductile ;
- des fibres à haute ténacité, noyées dans la matrice, caractérisée en ce que la majeure partie des fibres présentant une longueur comprise entre 0,1 et 10 mm, le matériau comprenant entre 2 et 10% de fibres à haute ténacité en poids. Le document EP-A2-1 617 098 divulgue le préambule de cette revendication 1.

Le dispositif peut également présenter une ou plusieurs des caractéristiques ci-dessous, considérées individuellement ou selon toutes les combinaisons techniquement possibles :
- le matériau comprend entre 5 et 9% en poids de fibres à haute ténacité ;
- les fibres à haute ténacité sont des fibres de verre, de carbone ou d'aramide ;
- la matrice est un polymère styrénique, ou un polycarbonate, ou un polyamide, ou un polyester saturé, ou une polyoléfine, ou un élastomère, ou un alliage d'un ou plusieurs desdits matériau;
- la majeure partie des fibres présente une longueur comprise entre 0,1 et 7 mm ; et
- la structure est une structure alvéolaire, comprenant une pluralité de parois définissant ensemble des cellules creuses juxtaposées les unes aux autres.

Selon un second aspect, l'invention porte sur une face avant de véhicule automobile, la face avant comprenant une traverse rigide présentant des parties latérales disposées dans le prolongement longitudinal des longerons du véhicule, et au moins un dispositif d'absorption d'énergie présentant les caractéristiques ci-dessus, interposé longitudinalement entre l'un des longerons et l'une des parties latérales de la traverse.

Selon un troisième aspect, l'invention porte sur une face avant de véhicule automobile, la face avant comprenant un cadre rigide comportant :
- une traverse transversale supérieure ;
- une traverse transversale inférieure ;
- des jambages verticaux raccordant les traverses supérieures et inférieures l'une à l'autre et prévus pour prendre appui sur les longerons du véhicule, au moins un des jambages verticaux constituant une structure d'absorption d'énergie présentant les caractéristiques ci-dessus.

La face avant peut également présenter une ou plusieurs des caractéristiques ci-dessous, considérées individuellement ou selon toutes les combinaisons techniquement possibles :
- le cadre rigide est venu d'injection ;
- les traverses supérieure et inférieure sont en un premier matériau comportant une matrice en une première matière plastique, les jambages étant en un second matériau différent du premier matériau et comportant une matrice constituée de la première matière plastique ;
- les traverses supérieure et inférieure sont en un premier matériau comportant une matrice en une première matière plastique et un élastomère, ou en un copolymère choc ; et
- les traverses supérieure et inférieure sont en un premier matériau comportant une matrice en une première matière plastique, les jambages étant en un second matériau différent du premier matériau et comportant une matrice constituée d'une seconde matière plastique différente de la première, les premier et second matériau comprenant un additif de couplage chimique des première et seconde matières plastiques, prévu pour renforcer la liaison des jambages avec les traverses supérieure et inférieure.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue de face, d'un cadre rigide comportant plusieurs dispositifs d'absorption d'énergie conformes à l'invention, le cadre rigide étant prévu pour être intégré dans une face avant de véhicule automobile ;
- la figure 2 est un graphique donnant la force de résistance de chacun des dispositifs d'absorption d'énergie du cadre de la figure 1, en fonction de l'enfoncement, à différentes températures ambiantes ;
- la figure 3 est un graphique montrant l'évolution du tarage d'un dispositif absorbeur d'énergie en polypropylène copolymère non conforme à l'invention, en fonction de la température ;

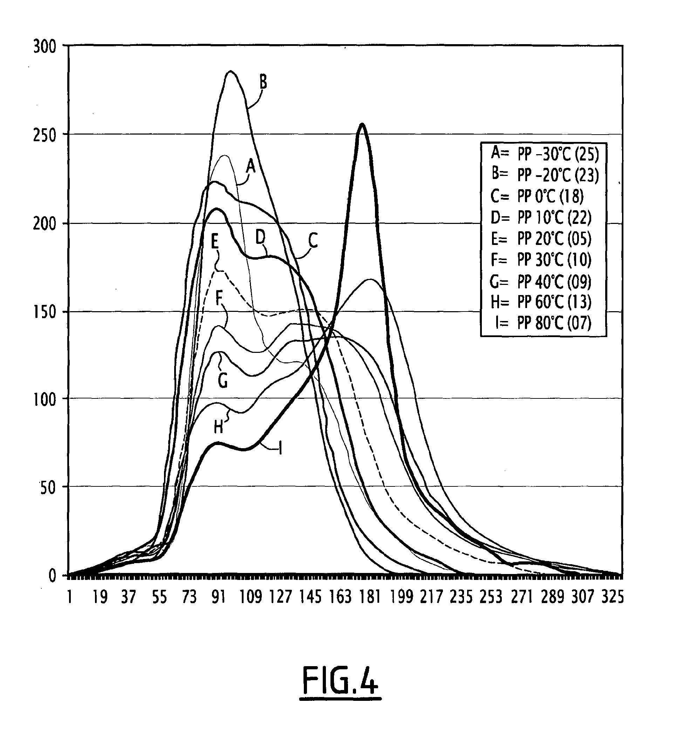

- la figure 4 est un graphique similaire à celui de la figure 2, pour un dispositif absorbeur de chocs en polypropylène non conforme à l'invention ; et
- la figure 5 montre des dispositifs d'absorption d'énergie et certains éléments d'une face avant conforme à un second mode de réalisation de l'invention.

Dans la description qui va suivre, les directions longitudinales et transversales, l'avant et l'arrière, sont entendus relativement à la direction de déplacement normale du véhicule.

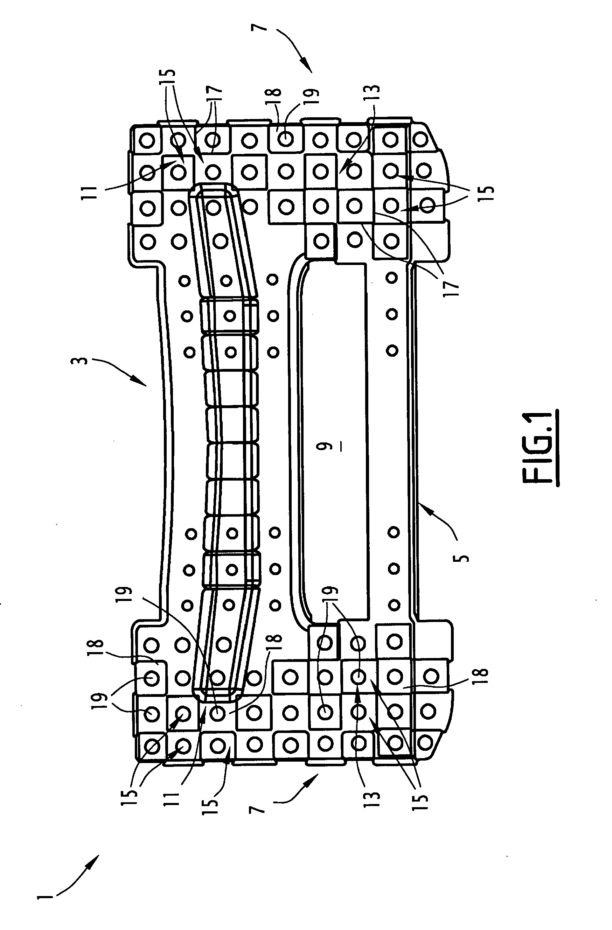

Le cadre 1 représenté sur la figure 1 est destiné à être intégré sensiblement verticalement dans une face avant de véhicule automobile. Il comporte une traverse transversale supérieure 3, une traverse transversale inférieure 5, et deux jambages 7, prévus pour être disposés sensiblement verticalement. Chaque jambage 7 raccorde une extrémité de la traverse transversale supérieure 3 à l'extrémité correspondante de la traverse transversale inférieure 5.

Les traverses et les jambages délimitent entre eux une ouverture centrale 9.

Les zones 11 du cadre 1, situées à l'intersection de la traverse supérieure 3 et des jambages 7, sont destinées à être placées sensiblement dans le prolongement longitudinal des longerons principaux du véhicule automobile. Les zones 13 situées sensiblement à l'intersection de la traverse inférieure 5 et des jambages 7, sont destinées à être placées dans le prolongement longitudinal des longerons inférieurs du véhicule automobile.

Dans ce mode de réalisation, chacune des zones 11 et 13 constitue un dispositif d'absorption d'énergie, taré pour des chocs de moyenne intensité (chocs Danner).

Les zones 11 et 13 du cadre sont réalisées dans un matériau comportant :
- une matrice en une matière plastique ductile ;
- des fibres à haute ténacité, noyées dans la matrice, la majeure partie des fibres présentant une longueur comprise entre 0,1 et 10 mm, le matériau comprenant entre 2 et 10% de fibres à haute ténacité en poids.

On entend ici par matrice le composant chimique ou copolymère constituant la majeure partie du matériau. Les autres composants sont des additifs qui sont dispersés et noyés dans la matrice. Ces additifs peuvent être de grande taille, comme les fibres mentionnés ci-dessus. Les additifs peuvent également être des composants chimiques dispersés et intimement mélangés sous forme de très fins nodules ou particules dans la matrice.

Dans le cas présent, la matrice comprend majoritairement une polyoléfine, ou un polyamide, ou un polymère styrénique, ou un polycarbonate, ou un polyester saturé, ou un élastomère. Typiquement, la matrice est constituée d'une polyoléfine, ou d'un polymère styrénique, ou d'un polycarbonate, ou d'un polyamide ou d'un polyester saturé ou d'un élastomère. La polyoléfine est typiquement un polypropylène ou un propylène-éthène copolymère, ou un propylène-hexène copolymère, ou un propylène-octène copolymère, ou un éthylène-octène copolymère, ou un propylène-éthylène-butène terpolymère.

Les fibres à haute ténacité sont typiquement des fibres de verre, des fibres de carbone, ou des fibres d'aramide.

Les fibres sont du type connu sous la dénomination « fibres courtes » ou « fibres longues ». Les fibres courtes présentent typiquement une longueur inférieure à 1 mm. Les fibres longues, pour la majeure partie des fibres, présentent une longueur comprise entre 1 et 7 mm.

De préférence, la majeure partie des fibres présente une longueur comprise entre 0,5 et 5 mm. Il est à noter que la longueur à laquelle il est fait référence ici correspond à la longueur des fibres constituant le produit fini. Une partie des fibres se casse au moment de la plastification et de l'injection du matériau dans un moule, à haute température.

Le matériau comprend, comme indiqué ci-dessus, entre 2 et 10% de fibres en poids, le reste étant constitué de la matrice en matière plastique, et éventuellement d'autres additifs. Encore de préférence, le matériau comprend entre 5 et 9% en poids de fibres.

Les zones 11 et 13 sont typiquement chacune une structure alvéolaire, comportant une pluralité de cellules creuses 15 juxtaposées les unes aux autres. Les cellules 15 sont définies par des parois 17, qui peuvent être communes le cas échéant à plusieurs cellules. Les parois sont constituées du matériau décrit ci-dessus.

Les cellules 15 sont par exemple fermées vers l'avant du véhicule par une cloison avant 18, et ouvertes vers l'arrière du véhicule. Elles sont typiquement fermées vers le haut, vers le bas, vers la droite et vers la gauche du véhicule. Dans l'exemple représenté sur la figure 1, la cloison avant 18 comporte un orifice 19, pour permettre l'échappement de l'air quand le dispositif d'absorption d'énergie est écrasé.

Les cellules 15, considérées en sections perpendiculairement à la direction longitudinale, peuvent présenter toutes sortes de formes. Dans l'exemple de la figure 1, elles sont sensiblement carrées ou rectangulaires. Elles peuvent également être hexagonales, triangulaires, circulaires, ovales etc...

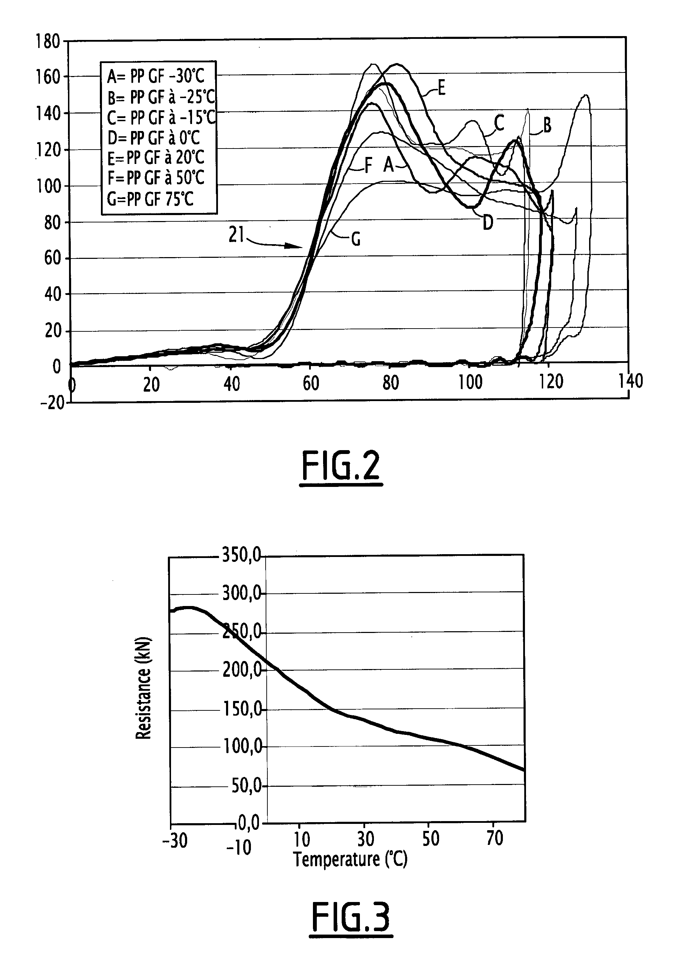

La figure 2 est un graphique qui montre l'évolution de la force de résistance à l'enfoncement (en ordonnée, exprimée en kilo newton kN), en fonction de la déformation du matériau sous l'effet du déplacement de l'objet impactant (en abscisse, exprimée en millimètres), pour chacune des zones 11 et 13. La figure 2 comporte plusieurs courbes, chaque courbe correspondant au comportement des zones 11 ou 13 à une température ambiante différente. Ces courbes ont été réalisées pour des dispositifs d'absorption d'énergie avec une matrice en propylène-éthylène copolymère, chargée en fibres de verre longue à 7,5%.

Comme visible sur la figure 2, toutes les courbes comportent un premier tronçon peu incliné entre 0 et 50 mm, suivi par un front 21 fortement incliné, proche de la verticale. Le tronçon faiblement incliné correspond à un moment où l'objet qui impacte la face avant n'a pas encore atteint les structures rigides de la face avant. Quand cet objet atteint le cadre, la force de résistance augmente brusquement, ce qui correspond au front 21. Quand l'objet charge la face avant avec une force supérieure au tarage des zones formant le dispositif d'absorption d'énergie, ces zones se déforment progressivement, de telle sorte que la force de résistance de ces zones diminue. Sur la figure 2, la hauteur du front 21 correspond au tarage du dispositif absorbeur d'énergie.

Entre -30° et 20°C, le tarage reste compris entre 1 50 kN et 170 kN. On n'observe aucun pic supérieur à 170 kN environ, de telle sorte que la caisse du véhicule, notamment les longerons supérieurs et inférieurs, sont parfaitement protégés. Ces valeurs élevées permettent également une absorption d'énergie efficace. Entre 50 et 80°C, l'absorbeur devient un peu plus souple, tout en conservant un tarage supérieur à 100 kN. La structure de caisse est toujours parfaitement protégée, et l'énergie est suffisamment absorbée.

Ainsi, les dispositifs d'absorption de chocs décrits ci-dessus présentent un comportement remarquablement homogène vis-à-vis de la température ambiante.

Ceci est dû au fait que l'adjonction de fibres en quantité réduite induit un comportement particulier du dispositif d'absorption de chocs. A basse température, et à température ambiante, la matrice se rompt de manière très progressive, sur un mode fragile. Le matériau subit une décohésion très progressive, depuis l'avant vers l'arrière du véhicule, sans rupture brutale de l'absorbeur. Un tel mode de déformation autorise une dissipation très efficace de l'énergie, et permet d'obtenir un tarage stable en température, à peine inférieur au tarage nominal des longerons. A haute température, le tarage diminue légèrement, mais dans des proportions inférieures à celles du matériau polymère constituant la matrice.

En effet, comme le montre la figure 3, un absorbeur d'énergie ayant la même structure que celle des zones 11 et 13 de la figure 1, taré pour offrir une résistance d'environ 150 kN à température ambiante, offre une résistance à l'écrasement qui varie de manière significative en fonction de la température. La courbe de la figure 3 a été établie pour un absorbeur en polypropylène. Le tarage décroît de manière régulière avec la température. A 80°C, ce tarage n'est plus que de 70 kN, ce qui est insuffisant pour absorber l'énergie résultant d'un choc. L'objet impactant la face avant risque alors d'entrer en collision avec la structure de la caisse et de lui occasionner des dommages irréversibles. Au contraire, à -20°C, le dispositif absorbeur d'énergie est beaucoup trop rigide (tarage d'environ 280 kN). Le tarage du dispositif absorbeur d'énergie devient supérieur au tarage des longerons, de telle sorte que ces longerons vont se déformer avant les absorbeurs d'énergie.

Le mode de déformation des dispositifs absorbeurs d'énergie de l'invention est différent de celui des dispositifs absorbeurs d'énergie en polymère ductile non chargé. Ces derniers se déforment par flambage, et plus précisément par bottelage. Dans ce mode de déformation, la structure forme des plis, à la façon d'une bouteille plastique qu'on écrase.

Il est à noter que les dispositifs d'absorption de chocs en un matériau comportant une matrice en matière plastique ductile et une concentration élevée de fibres à haute ténacité, par exemple plus de 15% de fibres à haute ténacité, n'offrent pas un comportement satisfaisant. Le matériau est extrêmement cassant à basse et moyenne température, notamment entre -30 et +20°C. Le matériau n'est alors plus apte à dissiper l'énergie efficacement : il s'effondre brutalement et se divise en multiples morceaux.

Dans l'exemple de réalisation de la figure 1, les traverses inférieures et supérieures peuvent avantageusement être en un matériau différent de celui des jambages. En effet, le cahier des charges des traverses est différent de celui des dispositifs d'absorption d'énergie. Les traverses supérieures et inférieures sont destinées à absorber l'énergie sur toute la plage de vitesse du véhicule et à s'opposer à l'intrusion en maintenant l'intégrité de la structure.

Dans un exemple de réalisation, les traverses inférieures et supérieures sont en un matériau comportant une matrice identique à celle des jambages 7, et un élastomère, par exemple de l'EPDM.

Dans ce cas, le cadre peut avantageusement être venu de matière. Il est par exemple obtenu par bi-injection ou co-injection des jambages et des traverses dans un même moule. On entend par bi-injection, une injection réalisée dans un moule comportant des orifices d'injection différents, chacun dédié à l'un des matériaux à injecter. On entend par co-injection, une injection dans un moule comportant un orifice d'injection unique, les deux matériaux étant injectés successivement dans le moule.

Dans un autre exemple de réalisation, les traverses supérieures et inférieures peuvent être réalisées dans un premier matériau comportant une matrice en une première matière plastique, les jambages étant dans un second matériau différent du premier matériau, et comportant une matrice constituée d'une seconde matière plastique différente de la première matière plastique. Dans ce cas, il est avantageux que les premier et second matériaux comprennent chacun un additif de couplage chimique des première et seconde matières plastiques, prévu pour renforcer la liaison des jambages avec les traverses supérieures et inférieures. Par exemple, la première matière plastique peut être du polyamide, et la seconde matière plastique du polypropylène, ou inversement. On connaît des additifs permettant de coupler chimiquement ces matières plastiques.

Dans tous les cas, le cadre obtenu est venu d'injection. Ceci permet d'intégrer facilement dans le cadre des zones fonctionnelles telles que des supports sous projecteur, une face avant technique, des zones formant porteur structurel de peau de bouclier ou d'accessoire tels que des feux antibrouillard, des calandres, des volets pilotés etc...

En variante, il est possible d'injecter séparément les jambages et les traverses supérieures et inférieures, et de les solidariser ensuite les unes aux autres. Il est également possible de prévoir dans le cadre des poutres plastiques ou métalliques, formant une armature sur laquelle sont ensuite injectés les jambages et les traverses supérieures et inférieures.

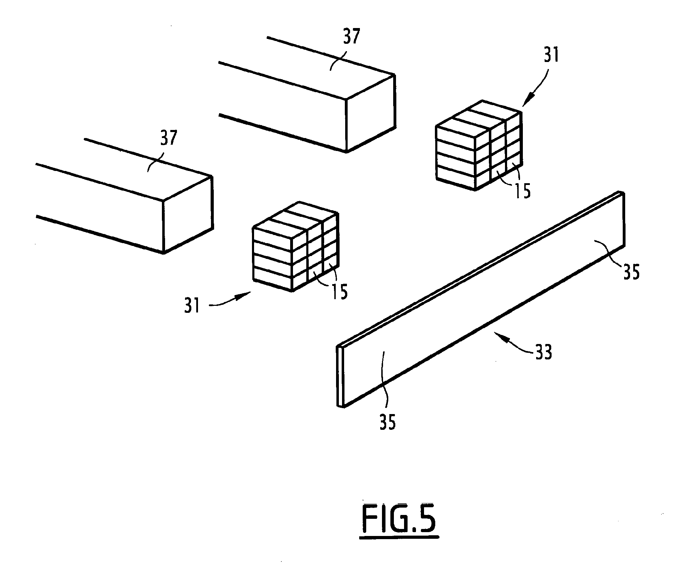

Dans le mode de réalisation de la figure 5, les dispositifs d'absorption d'énergie 31 ne sont pas intégrés à un cadre de la face avant.

La face avant comporte par exemple dans ce cas une traverse 33, par exemple métallique, les dispositifs absorbeurs d'énergie 31 étant interposés entre deux parties latérales 35 de la traverse 33, et les longerons 37 du véhicule. Chacun des dispositifs d'absorption d'énergie 31 est une structure alvéolaire du type décrit ci-dessus, constituée d'un matériau avec une matrice plastique ductile, et des fibres à haute ténacité.

Par exemple, chaque dispositif comporte quatre rangées de trois alvéoles. La face avant peut notamment comporter des platines, non représentées sur la figure 5 fixées par une première grande face chacune à un longeron 37, le dispositif d'absorption d'énergie étant rigidement fixé à une seconde grande face de ladite platine. Les longerons 37 peuvent être les longerons principaux du véhicule. Ils peuvent être également les longerons inférieurs du véhicule.

Les dispositifs d'absorption d'énergie décrits ci-dessus, et les faces avant intégrant de tels dispositifs d'absorption d'énergie, présentent de multiples avantages.

Les dispositifs d'absorption d'énergie présentent une masse réduite, du fait qu'ils sont intégralement réalisés en une matière plastique chargée. Ils sont simples de conception, et ne comprennent qu'un nombre de pièces réduit (une pièce par dispositif absorption d'énergie). Ils peuvent être obtenus facilement, par exemple par injection.

Les faces avant intégrant ces dispositifs d'absorption d'énergie, notamment quand elles comprennent un cadre du type décrit relativement à la figure 1, sont particulièrement simples de fabrication et de montage. Il est notamment possible d'intégrer de multiples zones fonctionnelles sur de tels cadres.

Les dispositifs d'absorption d'énergie présentent un tarage remarquablement stable en température.

Les dispositifs d'absorption d'énergie ont été décrits ci-dessus pour l'absorption de chocs de moyenne intensité. Toutefois, il pourrait être taré pour absorber l'énergie de chocs de plus faible ou de plus haute intensité.

Ces dispositifs d'absorption d'énergie peuvent être utilisés non seulement dans une face avant de véhicule automobile, mais également à l'arrière ou dans toute autre zone d'un véhicule où il est nécessaire d'absorber une énergie calibrée.

Dans le mode de réalisation de la figure 1, les jambages 7 peuvent être intégralement réalisées dans le matériau adapté pour les zones formant dispositifs absorption d'énergie 11 et 13. Alternativement, les jambages 7 peuvent comporter des zones constituées du matériau adapté pour les zones 11 et 13, et d'autres zones constituées d'un autre matériau, par exemple du matériau constituant les traverses 3 et 5.

Les dispositifs d'absorption d'énergie de l'invention ont été décrits relativement à la figure 1 comme constituant des zones d'un cadre avec deux traverses et deux jambages. Ces dispositifs pourraient constituer des zones de cadre ayant toutes sortes de formes, ne comportant qu'une seule traverse, ou plus de deux traverses, ou ayant toute autre forme.

De même, les dispositifs d'absorption d'énergie ont été décrits relativement à la figure 5 comme étant des blocs intégrés entre une traverse métallique et les longerons du véhicule. Ces blocs pourraient être intégrés dans des faces avant constituées différemment.

## Revendications

1. Dispositif d'absorption d'énergie pour véhicule automobile, le dispositif d'absorption d'énergie (11, 13, 31) comprenant une structure prévue pour se déformer de manière plastique sous l'effet d'un choc d'énergie donnée en absorbant une partie de l'énergie du choc, la structure étant en un matériau comportant :
- une matrice en une matière plastique ductile ;
- des fibres à haute ténacité, noyées dans la matrice, **caracterisée en ce que** la majeure partie des fibres présentant une longueur comprise entre 0,1 et 10 mm, le matériau comprenant entre 2 et 10% de fibres à haute ténacité en poids.

2. Dispositif selon la revendication 1, **caractérisé en ce que** le matériau comprend entre 5 et 9% en poids de fibres à haute ténacité.

3. Dispositif selon la revendication 1 ou 2, **caractérisé en ce que** les fibres à haute ténacité sont des fibres de verre, de carbone ou d'aramide.

4. Dispositif selon l'une quelconque des revendications précédentes, **caractérisé en ce que** la matrice est une polyoléfine, ou un polyamide, ou un polyester saturé, ou un polymère styrénique, ou un polycarbonate, ou un alliage d'un ou plusieurs desdits matériaux.

5. Dispositif selon l'une quelconque des revendications précédentes, **caractérisé en ce que** la majeure partie des fibres présente une longueur comprise entre 0,1 et 7 mm.

6. Dispositif selon l'une quelconque des revendications précédentes, **caractérisé en ce que** la structure est une structure alvéolaire, comprenant une pluralité de parois (17) définissant ensemble des cellules creuses (15) juxtaposées les unes aux autres.

7. Face avant de véhicule automobile, la face avant comprenant une traverse rigide (33) présentant des parties latérales (35) disposées dans le prolongement longitudinal de longerons (37) du véhicule, et au moins un dispositif d'absorption d'énergie (31) selon l'une quelconque des revendications précédentes interposé longitudinalement entre l'un des longerons (37) et l'une des parties latérales (35) de la traverse (33).

8. Face avant de véhicule automobile, la face avant comprenant un cadre rigide (1) comportant :
- une traverse transversale supérieure (3);
- une traverse transversale inférieure (5);
- des jambages verticaux (7) raccordant les traverses supérieure et inférieure (3, 5) l'une à l'autre et prévues pour prendre appui sur des longerons du véhicule, au moins un des jambages verticaux (7) comprenant une structure d'absorption d'énergie (11, 13) selon l'une des revendications 1 à 6.

9. Face avant selon la revendication 8, **caractérisé en ce que** le cadre rigide (1) est venu d'injection.

10. Face avant selon la revendication 8 ou 9, **caractérisé en ce que** les traverses supérieure et inférieure (3, 5) sont en un premier matériau comportant une matrice en une première matière plastique, les jambages (7) étant en un second matériau différent du premier matériau et comportant une matrice constituée de la première matière plastique.

11. Face avant selon l'une quelconque des revendications 8 à 10, **caractérisé en ce que** les traverses supérieure et inférieure (3, 5) sont en un premier matériau comportant une matrice en une première matière plastique et un élastomère, ou en un copolymère choc.

12. Face avant selon la revendication 8 ou 9, **caractérisé en ce que** les traverses supérieure et inférieure (3, 5) sont en un premier matériau comportant une matrice en une première matière plastique, les jambages (7) étant en un second matériau différent du premier matériau et comportant une matrice constituée d'une seconde matière plastique différente de la première, les premier et second matériaux comprenant un additif de couplage chimique des première et seconde matières plastiques, prévu pour renforcer la liaison des jambages (7) avec les traverses supérieure et inférieure (3, 5).

## Patentansprüche

1. Energieabsorptionsvorrichtung für ein Kraftfahrzeug, wobei die Energieabsorptionsvorrichtung (11, 13, 31) eine Struktur aufweist, die dazu vorgesehen ist, sich unter der Einwirkung eines Aufpralls mit einer bestimmten Energie plastisch zu verformen und dabei einen Teil der Energie des Aufpralls aufzunehmen, wobei die Struktur aus einem Material besteht, das umfasst:
- eine Matrix aus einem duktilen Kunststoff;
- Fasern hoher Zähigkeit, die in die Matrix eingebettet sind, **dadurch gekennzeichnet, dass** die meisten Fasern eine Länge aufweisen, die zwischen 0,1 und 10 mm beträgt, wobei der Werkstoff zwischen 2 und 10 Gew.-% Fasern hoher Zähigkeit umfasst.

2. Vorrichtung nach Anspruch 1, **dadurch gekennzeichnet, dass** das Material zwischen 5 und 9 Gew.-% Fasern hoher Zähigkeit umfasst.

3. Vorrichtung nach Anspruch 1 oder 2, **dadurch gekennzeichnet, dass** die Fasern hoher Zähigkeit Glas-, Carbon- oder Aramidfasern sind.

4. Vorrichtung nach einem der vorhergehenden Ansprüche, **dadurch gekennzeichnet, dass** die Matrix ein Polyolefin oder ein Polyamid oder ein gesättigter Polyester oder ein Polymer auf Styrolbasis oder ein Polycarbonat oder eine Legierung aus einem oder mehreren dieser Materialien ist.

5. Vorrichtung nach einem der vorhergehenden Ansprüche, **dadurch gekennzeichnet, dass** der Großteil der Fasern eine Länge aufweist, die zwischen 0,1 und 7 mm beträgt.

6. Vorrichtung nach einem der vorhergehenden Ansprüche, **dadurch gekennzeichnet, dass** die Struktur eine Wabenstruktur ist, die eine Vielzahl von Wänden (17) aufweist, die zusammen nebeneinander liegende Hohlzellen (15) definieren.

7. Kraftfahrzeugfront, wobei die Front einen starren Querträger (33), der Seitenteile (35) aufweist, die in der Längsverlängerung von Längsträgern (37) des Fahrzeugs angeordnet sind, und mindestens eine Energieabsorptionsvorrichtung (31) nach einem der vorhergehenden Ansprüche umfasst, die der Länge nach zwischen dem einen der Längsträger (37) und dem einen der Seitenteile (35) des Querträgers (33) angeordnet ist.

8. Kraftfahrzeugfront, wobei die Front einen starren Rahmen (1) umfasst, der aufweist:
- einen oberen, querverlaufenden Querträger (3);
- einen unteren, querverlaufenden Querträger (5);
- vertikale Schenkel (7), die den oberen und unteren Querträger (3, 5) miteinander verbinden und dazu vorgesehen sind, sich an die Längsträger des Fahrzeugs anzulegen, wobei mindestens einer der vertikalen Schenkel (7) eine Energieabsorptionsvorrichtung (11, 13) nach einem der Ansprüche 1 bis 6 aufweist.

9. Front nach Anspruch 8, **dadurch gekennzeichnet, dass** sich der starre Rahmen (1) aus einer Einspritzung ergeben hat.

10. Front nach Anspruch 8 oder 9, **dadurch gekennzeichnet, dass** der obere und untere Querträger (3, 5) aus einem ersten Material sind, das eine Matrix aus einem ersten Kunststoff umfasst, wobei die Schenkel (7) aus einem zweiten Material sind, das sich vom ersten Material unterscheidet und eine Matrix umfasst, die aus dem ersten Kunststoff besteht.

11. Front nach einem der Ansprüche 8 bis 10, **dadurch gekennzeichnet, dass** der obere und untere Querträger (3, 5) aus einem ersten Material, das eine Matrix aus einem ersten Kunststoff und ein Elastomer umfasst, oder aus einem schlagfesten Copolymer sind.

12. Front nach Anspruch 8 oder 9, **dadurch gekennzeichnet, dass** der obere und untere Querträger (3, 5) aus einem ersten Material sind, das eine Matrix aus einem ersten Kunststoff umfasst, wobei die Schenkel (7) aus einem zweiten Material sind, das sich vom ersten Material unterscheidet und eine Matrix umfasst, die aus einem zweiten Kunststoff besteht, der sich vom ersten Kunststoff unterscheidet, wobei das erste und zweite Material ein Additiv zur chemischen Kopplung des ersten und zweiten Kunststoffs umfasst, das dazu vorgesehen ist, die Verbindung der Schenkel (7) mit dem oberen und unteren Querträger (3, 5) zu verstärken.

## Claims

1. An energy absorption device for a motor vehicle, the energy absorption device (11, 13, 31) comprising a structure provided so as to plastically deform under the effect of an impact of given energy, absorbing part of the energy of the impact, the structure being made of a material comprising:
- a matrix of a ductile plastic material;
- high-tenacity fibers embedded in the matrix, **characterized in that** the majority of the fibers has a length of between 0.1 and 10 mm, and the material comprising between 2 and 10 wt% of high-tenacity fibers.

2. The device according to claim 1, **characterized in that** the material comprises between 5 and 9 wt% of high-tenacity fibers.

3. The device according to claim 1 or 2, **characterized in that** the high-tenacity fibers are glass, carbon or aramid fibers.

4. The device according to any one of the preceding claims, **characterized in that** the matrix is a polyolefin, or polyamide, or saturated polyester, styrenic polymer, or polycarbonate, or polyolefin, or an alloy of one or more of the aforementioned materials.

5. The device according to any one of the preceding claims, **characterized in that** the majority of the fibers have a length comprised between 0.1 and 7 mm.

6. The device according to any one of the preceding claims, **characterized in that** the structure is a cellular structure, comprising a plurality of walls (17) together defining hollow cells (15) that are juxtaposed relative to one another.

7. A front face of an automobile, the front face comprising a rigid crosspiece (33) having side portions (35) positioned in the longitudinal extension of the beams (37) of the vehicle, and at least one energy absorption device (31) according to any one of the preceding claims, inserted longitudinally between one of the beams (37) and one of the side portions (35) of the crosspiece (33).

8. A motor vehicle front face, the front face comprising a rigid frame (1) including:
- an upper transverse crosspiece (3);
- a lower transverse crosspiece (5);
- vertical legs (7) connecting the upper and lower crosspieces (3, 5) to one another and provided to bear on the beams of the vehicle, at least one of the vertical legs (7) constituting an energy absorption structure (11, 13) according to one of claims 1 to 6.

9. The front face according to claim 8, **characterized in that** the rigid frame (1) is made by injection.

10. The front face according to claim 8 or 9, **characterized in that** the upper and lower crosspieces (3, 5) are made from a first material including a matrix made from a first plastic material, the legs (7) being made from a second material different from the first material and including a matrix made up of the first plastic material.

11. The front face according to any one of claims 8 to 10, **characterized in that** the upper and lower crosspieces (3, 5) are made from a first material including a matrix made from a first plastic material and an elastomer, or an impact copolymer.

12. The front face according to claim 8 or 9, **characterized in that** the upper and lower crosspieces (3, 5) are made from a first material including a matrix made from a first plastic material, the legs (7) being made from a second material different from the first material and including a matrix made up of a second plastic material that is different from the first, the first and second materials comprising a chemical coupling additive for the first and second plastic materials, provided to strengthen the connection of the legs (7) with the upper and lower crosspieces (3, 5).
